# EUROPEAN PATENT SPECIFICATION

(11) **EP 1 907 290 B1**
(45) Date of publication and mention of the grant of the patent: **16.04.2014**
(21) Application number: 06785017.2
(22) Date of filing: 16.06.2006
(51) Int. Cl.: B32B 27/08, C09D 151/04, C08L 51/04, C09D 151/00, C08L 51/00

(54) **WINDOW ENVELOPES WITH OPTICAL CHARACTER READABLE WINDOW FILM PATCHES**
FENSTERUMSCHLÄGE MIT FENSTERFOLIEN-PATCHES MIT OPTISCH LESBAREN ZEICHEN
ENVELOPPES A FENETRE A FILMS DE FENETRE LISIBLES PAR DES LECTEURS DE CARACTERES OPTIQUES

(30) Priority: 27.06.2005 US 694210 P
(43) Date of publication of application: 09.04.2008
(73) Proprietor: Dow Global Technologies LLC, Midland, MI 48674 (US)
(72) Inventor: ZHOU, Weijun, Lake Jackson, TX 77566 (US); LAFOLLETTE, William, R., Midland, MI 48604 (US); PATEL, Rajen, M., Lake Jackson, TX 77566 (US); HAHN, Stephen, F., Midland, MI 48642 (US); GABELNICK, Aaron, M., Aurora, IL 60504 (US); LAMBERT, Christina, A., Midland, MI 48642 (US)
(74) Representative: Beck Greener
(86) International application number: PCT/US2006/023556
(87) International publication number: WO 2007/001916

(56) References cited:
- EP-A- 0 352 553
- WO-A-2004/072137
- US-A1- 3 801 352
- US-A1- 2002 143 107
- US-B1- 6 221 471

## Description

The present invention relates generally to window envelopes and to window film patches or coverings that seal or close openings of such window envelopes yet allow select printed information contained within the window envelope to be viewed or read by individuals as well as by optical character readers such as automatic mail sorting systems employed by the United States Postal Service (USPS). The present invention relates particularly to window envelopes with window patches that allow such information to be read during processing of such window envelopes by optical character readers without a significant increase in error rate even when the window patches are not stretched tight and/or substantially free of puckers or ripples that may obscure printed information (for example, address or barcode) covered by the window patch.

### BACKGROUND OF THE INVENTION

A window envelope is an envelope with one or more openings of any shape, typically rectangular, that allows examination of information, usually a barcode, name and address, printed on a limited area of matter disposed within the envelope. The opening or openings may be sealed or closed with a window patch composed of a film that allows the printed information to be viewed by individuals as well as by optical character readers such as USPS automatic mail sorting systems. MERLIN (Mail Evaluation and Readability Look up Instrument) is an automated testing device used to evaluate large volume mailings to determine if a mailing qualifies for a USPS work sharing or automation discount. Customers complain of occasional disqualification of what appear to be good quality mail pieces by MERLIN and loss of their automation discounts when using window envelopes. MERLIN reading errors may result in imposition of penalties, by the USPS, that usually range from $2,000 to $100,000 per large volume mailing. Such penalties generate a desire to obtain window envelopes that markedly reduce, preferably eliminate, MERLIN equipment reading errors and provide savings to mailers that use such window envelopes.

Current window envelopes include window patches fabricated from commercial biaxially oriented films that typically comprise GPPS/HIPS resin blends with HIPS resin constituting less than (<) 40 weight percent (wt%), based upon blend weight, of the blend. The commercial films usually have a 45° gloss (defined below) in excess of 50 and a haze (defined below) less than 25%. Conventional HIPS resins have a rubber content of no more than (≤) 10 wt%, based upon total HIPS weight Typical practice balances rubber content with HIPS percentage in order to attain a blend rubber content of < 2.5 wt%, based upon blend weight. In other words, a high rubber content HIPS resin will usually constitute much less of a blend than a low rubber content HIPS resin. Such films sometimes fail MERLIN testing, possibly due to bar code reading errors.

A potential source of reading errors stems from puckering or wrinkling of the window patch, apparently as a result of dimensional changes of the envelope with respect to the window patch, especially after the window envelope is wetted and dried before evaluation using MERLIN equipment (also known as "MERLIN Harsh Condition Failure Determination" or "MHCFD"), perhaps because of variation in humidity, temperature or both. Skilled artisans understand that paper tends to shrink, primarily in the cross grain or transverse direction (TD), to a size smaller than its original dimension if the paper is wetted and then dried. A window patch fabricated from, for example, polystyrene film, does not undergo shrinkage and will buckle or wrinkle as the paper to which it is bonded shrinks.

A second potential source of reading error may stem from variability of lamp intensity within a MERLIN apparatus.

Window envelope or patch film haze also affects MERLIN test reject rates when the haze reaches a level where bar code readers fail to accurately distinguish between neighboring bars in a bar code. The USPS establishes a recommended maximum haze, determined in accord with American Society for Testing and Materials (ASTM) D-1003, of 70%.

EP 0 352 553 discloses a window envelope having window opening being closed or sealed by a non-opaque window patch comprising an organic polymer composition selected from a rubber-modified vinyl aromatic polymer resin and a blend of a vinyl aromatic polymer resin with a rubber-modified vinyl aromatic polymer resin, the rubber-modified vinyl aromatic resin having an average unconstrained rubber particle size within a range of from 0.1 micrometer to 10 micrometers.

United States Patent (USP) 5,009,953 to Foster et al. discloses a window envelope having a non-opaque plastic window patch formed of a film comprising polystyrene and from about 0.1 to about 3.0 wt% of one or more particulate anti-flecking agents having a number average particle size of from about 0.1 micrometer (µm) to about 10.0 µm.

USP 6,579,946 to Chau provides teachings relative to low-gloss biaxially oriented polymer films that comprise a vinyl aromatic polymer and substantially non-spherical rubber particles. The rubber particles are present in an amount of <2 wt%, based upon film weight, and have an aspect ratio (length to diameter ratio) greater than (>) 5.

A first aspect of the present invention is a window envelope having one or more window openings, at least one window opening being closed or sealed by a non-opaque polymeric or plastic window patch, the window patch comprising an optical-scanner readable, biaxially-oriented polymeric film, the film having a 45° gloss, determined in accordance with ASTM D-2457, that is less than or equal to 50 and comprising an organic polymer composition selected from a rubber-modified vinyl aromatic polymer resin and a blend of a vinyl aromatic polymer resin with a rubber-modified vinyl aromatic polymer resin, the rubber-modified vinyl aromatic resin having an average unconstrained rubber particle size within a range of from 0.1 micrometer to 10 micrometers. The rubber-modified vinyl aromatic polymer resin is present in an amount sufficient to provide the film with a rubber content that is greater than or equal to 2 percent by weight based on the weight of the film and up to 9 percent by weight, based on the weight of the film. The film preferably has a percent haze or "H", determined in accordance with ASTM D-1003, of no more than 70 percent (%). The film optionally has an external coating or layer of an inorganic material deposited on at least one major surface of the film.

### DETAILED DESCRIPTION

The polymeric film may be a monolayer film or an external layer of a multilayer film. When the polymeric film is a monolayer film, the external coating layer, optional in the first aspect and required in the third aspect, may be applied to either or both sides (major surfaces) of the film. When the polymeric film is a multilayer film, at least one outer layer of the multilayer film comprises the organic polymer composition and, when an external coating layer is present, said external coating layer is applied to an outer surface of at least one such outer layer.

Where ranges are presented, for example, a particle size of from 0.1 micrometer (µm) to 10 µm, both end points of the range (for example, 10 µm) are included in the range unless otherwise stated.

As used herein with respect to rubber particle size, the terms "average particle size" and "particle size" are intended to be interchangeable.

For purposes of the present invention, "forty five degree (45°) gloss" is determined by measuring transverse direction (TD) gloss and machine direction (MD) gloss for each side of a film from which a window patch is cut for a window envelope of the present invention and average the two gloss values to provide a gloss value for that side. Gloss measurements are made in accordance with ASTM D-2457. The lower of the two average values represents the 45° gloss of the film.

Uncoated films used in window patches for the window envelopes have a 45° gloss that is preferably less than or equal (≤) to 50, more preferably ≤ 45, still more preferably ≤ 40, and most preferably ≤ 30. The 45° gloss is preferably greater than (>) 0, more preferably greater than or equal (≥) to 5. A 45° gloss > 50 is undesirable because specular reflection (ASTM 2457) from the film may be so intense as to effectively blind an optical character reader such as that embodied in MERLIN equipment.

The window envelopes include a window patch formed from a film, whether coated or uncoated, that has a percent haze, determined in accordance with ASTM D-1003 that is preferably ≤ 70 %, more preferably ≤ 65 percent (%), still more preferably ≤ 60%, and most preferably ≤ 50%. The percent haze is preferably > 0 %, more preferably > 30%. A percent haze > 70% yields unacceptable print reflectance differences and renders window envelopes with window patches formed from a film with such a percent haze > 70% essentially useless for use in optical scanner applications where one tries to read information through such a film. In other words, reflection has a diffuse component that, as it increases, causes an image to become indistinct and blurred. An indistinct or blurred image leads to inaccuracies when the image is evaluated using an optical character reader such as that embodied in MERLIN equipment. While haze is not desirable from an optical character reader perspective, some consumers desire a minimal amount of haze to provide a level of security for envelope contents.

The window envelopes include a window patch formed from a film having a 45° gloss, determined in accord with ASTM D-2457, that is preferably less than or equal (≤) to 50, more preferably ≤ 45, still more preferably ≤ 40, even more preferably ≤ 35, and most preferably ≤ 30. The 45° gloss is preferably greater than (>) 0, more preferably greater than or equal (≥) to 5. When the film has an external coating or layer of inorganic material deposited thereon and H < 22%, the 45° gloss is preferably < (104.4*e^{-0.0289*H})-8, more preferably < (104.4*e^{-0.0289*H})-10, and still more preferably < (104.4*e^{-0.0289*H})-15. A 45° gloss > 50 in conjunction with an H ≥ 22% or in excess of (104.4*e^{-0.0289*H})-8 where H is < 22% is undesirable because total reflection (ASTM E1164, Procedure B) from window patch surfaces may be intense enough to effectively blind an optical character reader such as that embodied in MERLIN equipment. The expressions (104.4*e^{-0.0289*H})-8 and 104.4*exp(-0.0289*H) - 8 are different ways of expressing the same thing.

It is believed that as 45° gloss values decrease and approach zero, MHCFD failure rates also decrease. It is also believed that while high (for example, > 30%) haze is typically present in very low gloss films (for example, 45° gloss less than 50), the gloss value of such films largely controls whether they will yield window envelope patches that, when affixed to a window envelope using conventional procedures, allow the window envelope to attain a satisfactory MHCFD evaluation. In addition, the window envelope film must have a thickness and a flexural modulus sufficient to allow patches from the film to be affixed to envelope windows at commercially acceptable production speeds without undesirable buckling or puckering due to residual stress released from envelope paper. The thickness must not, however, be so great that the window envelopes with patches formed from a polymeric film becomes economically unattractive. The thickness desirably ranges from 0.8 mil to 2 mils (20.3 micrometers (µm) to 51µm), preferably from 1 mil to 1.5 mil (25.4 µm to 38.1 µm), more preferably from 1.05 mil to 1.25 mil (26.7 µm to 31.8 µm).

Skilled artisans also recognize that MERLIN readability failure is a statistical phenomenon. A MERLIN readability failure rate of zero (0), while clearly desirable for an entity seeking to qualify for a USPS work sharing discount, may be cost-prohibitive. A MERLIN readability failure rate of ≤ 20% qualifies for at least a partial USPS work sharing discount. A MERLIN readability failure rate of ≤10% for a batch of mailings qualifies a sender for a full automation discount. A MERLIN readability failure rate of > 10%, but ≤ 20%, qualifies for a partial automation discount. A MERLIN readability failure rate > 20% translates to no automation discount Based upon a desire to qualify for at least a partial automation discount, the MERLIN readability failure rate is preferably within a range of from ≥ to 0% to ≤ to 20%. The range is more preferably from ≥ 0% to ≤ 10%, still more preferably from ≥ 0% to ≤ 5%, and most preferably from ≥ 0% to ≤ 1%.

The window envelopes include window patches formed from monolayer films that comprise, or from a multilayer film having an outer layer that comprises, ≥ 40 wt%, based upon total organic polymer resin weight in the film or film layer, whichever is appropriate, rubber-modified vinyl aromatic polymer resin and may comprise as much as 100 wt%, based upon total organic polymer weight, of such resin. The 40 wt% lower limit applies to a rubber-modified vinyl aromatic polymer resin with a rubber content of > 2 wt%, preferably ≥ 3 wt% to 9 wt%, and more preferably ≥ 6 wt% to 9 wt%, based upon total resin weight, and an unconstrained rubber particle size of from 0.1 µm to 10 µm, preferably from 0.4 µm to 8 µm and more preferably from 0.4 µm to 5 µm. Irrespective of whether the film comprises HIPS or a blend of HIPS and GPPS, HIPS is present in an amount, and with a rubber content, sufficient to yield a film with a rubber particle content of > 2 percent by weight (wt%), based upon weight of HIPS or HIPS/GPPS blend, whichever is appropriate.

The window envelopes include window patches, especially window patches that have an external coating or layer of an inorganic material, formed from monolayer films that comprise, or from a multilayer film having an outer layer that comprises, < 40 wt%, based upon total organic polymer resin weight in the film or film layer, whichever is appropriate, rubber-modified vinyl aromatic polymer resin. The rubber content of such rubber-modified vinyl aromatic polymer resin is > 2 wt%, preferably ≥ 3 wt% to 9 wt%, and more preferably ≥ 6 wt% to 9 wt%, based upon total resin weight.

As unconstrained rubber particle sizes increase from 0.1 µm to 10 µm, the rubber ' becomes more effective in reducing film gloss than an identical amount of a smaller particle size rubber and one may, if desired, use an amount of HIPS somewhat < 40 wt%. Rubber particles having an unconstrained particle size > 10 µm generally lead to films with undesirably low clarity and unacceptably high haze, whereas a film that contains rubber particles having an unconstrained particle size of < 0.1 µm has unacceptable 45° gloss values at rubber concentrations that provide other attributes of films of the present invention. The unconstrained rubber particles may have either a multimodal or monomodal particle size distribution. One can determine unconstrained rubber particle size within a film by dissolving enough film into a 1 wt% solution of ammonium thiocyanate in dimethyl formamide to form a cloudy solution, then using a Beckman-Coulter 2E apparatus equipped with a 30 µm aperture to measure the particle size. The rubber content is preferably at least 3 wt%, more preferably at least 3.5 wt%, still more preferably at least 4.2 wt% and yet more preferably at least 7 wt%, but less than 12 wt%, more preferably less than 11 wt% and still more preferably less than 10 wt%, in each case based upon rubber-modified vinyl aromatic polymer resin weight

While a film used for window patches of the window envelopes may contain, as a sole polymeric resin, the rubber-modified vinyl aromatic polymer resin (for example, HIPS), the film preferably comprises a blend of HIPS and a vinyl aromatic polymer (VAP). The rubber-modified VAP resin content of the film preferably ranges from 40 w% (for a resin with a rubber content of 7 wt%, based upon resin weight, and a rubber particle size of approximately 2 µm) to 100 wt%, more preferably from 50 wt % to 100% and most preferably from 60 wt% to 100 wt%, in each case based upon combined weight of VAP and rubber-modified VAP. Two or more rubber-modified VAP resins, for example, HIPS resins with different rubber particle sizes, may be used to attain desirable mechanical and optical properties.

Suitable vinyl aromatic polymers (VAPs) include polymers of vinyl aromatic monomers such as styrene and alkyl or aryl ring substituted styrenes, such as para-methylstyrene, para-tertiary-butyl styrene. Suitable VAPs also include copolymers (one comonomer in addition to a vinyl aromatic monomer) and interpolymers (two or more monomers in addition to a vinyl aromatic monomer) of vinyl aromatic monomers and monomers such as acrylonitrile, methacrylontrile, methacrylic acid, methacrylic acid esters such as methyl methacrylate, acrylic acid and acrylic acid esters such as butyl acrylate, anhydrides such as maleic anhydride. Suitable VAPs further include impact modified polymers such as HIPS and acrylonitrile-butadiene-styrene terpolymers. Preferably, the VAP is polystyrene.

Skilled artisans recognize that minor amounts (less than 10 wt%, preferably less than 5 wt% and more preferably <1 wt%, in each case based upon total film weight) of additional polymers such as ethylene/vinyl acetate copolymers and polymethylmethacrylate so long as the additional polymers do not adversely affect desirable haze, gloss and machine-readability of films used to form window patches that are, in turn, used to cover openings of window envelopes.

The choice and amount of rubber-modified VAP resin depends primarily on the rubber particle size. Low 45° gloss (≤) film typically cannot be obtained solely with general purpose polystyrene (GPPS). A combination or rubber modified VAP and GPPS yields a film with a significantly rougher surface. Surface roughness plays a major role in determining a film's gloss value, with an increase in roughness resulting in a decrease in gloss value. A given degree of surface roughness may be achieved either with a relatively large amount of small particle size rubber (for example, 0.1 µm) or, relative to the amount of small particle size rubber, a reduced quantity of large particle size rubber (for example, 10 µm).

Rubber particles typically comprise at least one alkadiene polymer. Suitable alkadienes are 1,3- conjugated dienes such as butadiene, isoprene, chloroprene, or piperylene. Preferably, the polymer is a homopolymer of 1,3-conjugated dienes, with homopolymers of 1,3-butadiene being especially preferred. Alkadiene copolymer rubber containing small amounts, for example less than 15 wt%, preferably less than 10 wt%, based upon copolymer weight, of monovinylidene aromatic monomer are also suitable. Rubbers of block copolymer type, for example styrene butadiene block copolymer are also suitable.

Films used for window patches in the window envelopes are preferably oriented, at least to a degree and at least in the machine direction, because of the process by which they are prepared. For example, conventional blown film processes and cast tentering processes inherently orient the resulting film Skilled artisans recognize that one may vary the degree of orientation and, in doing so, may affect other film properties such as percent haze; clarity and 45° gloss.

Skilled artisans recognize that one may, by properly controlling drawing and cooling conditions, impart orientation into a film product during various stages of fabrication. The extent of orientation can, for example, be varied through control of draw ratio along film MD and/or TD, strain rate of drawing, and other processing parameters, especially temperature.

- Skilled artisans commonly understand film formation from a melt rheology point of view as extrusion and elongation of a viscoelastic melt under controlled conditions. They consider film formation to be complete when a film-shaped molten polymer, after experiencing a viscoelastic flow history, is cooled to ambient temperature. Flow behavior of the viscoelastic melt throughout the extrusion process typically depends upon a relationship between viscosity, shear rate, and temperature. The oriented polymer films, preferably biaxially oriented polymer films, may be either monolayer or multilayer films. In a multilayer film, at least one outer layer comprises a rubber-modified vinyl aromatic polymer resin as disclosed above, optionally in combination with a vinyl aromatic polymer resin, also as disclosed above.

Films used for window patches in the window envelopes may contain one or more conventional additives such as antioxidants, inorganic particulates, abrasion resistance additives, polytetrafluoroethylene fibbers or flakes and processing aids. Primary antioxidants include phenolic antioxidants such as IRGANOX™ 1010 and IRGANOX™1076, both commercially available from Ciba Specialty Chemicals, and CYANOX™ 1790, commercially available from Cytec Industries Inc. Secondary antioxidants include hydrolytically stable phosphite antioxidants such as IRGANOX™ 168, commercially available from Ciba Specialty Chemicals. Inorganic particulates, which may have a beneficial effect upon film scratch resistance, include talc, calcium carbonate and silicon dioxide. Abrasion resistance additives include particulate polyamides. Core-shell polymer particles and crosslinked polymer particles or microspheres, such as styrenebutadiene core-shell rubber and styrene-divinylbenzene crosslinked polymer spheres, with a refractive index of from 1.55 to 1.65 may also be used if desired as taught by Mitchell A. Winnick in "Two-Stage Dispersion Polymerization Toward Monodisperse Controlled Micrometer Sized Copolymer Particles", Journal of the American Chemical Society, Volume 126, page 6562 (2004).

Vinyl aromatic polymer films in general and those films used for window patches in the window envelopes in particular may, as noted above, include a reflection-reducing, external inorganic coating layer that is applied to at least one major surface of the film. The external layer may be applied by any conventional technique such as evaporation, sputtering, solution deposition, or, preferably, atmospheric plasma deposition. The inorganic coating layer preferably comprises at least one of magnesium difluoride (MgF₂), silicon oxide (SiOₓ), lithium fluoride (LiF), cryolite, thallium fluoride (ThF₄) and other inorganic materials that have an index of refraction between 1.00 and 1.54.

The coating layer has a refractive index that is preferably less than 1.50, more preferably less than 1.45 and most preferably less than 1.40. The refractive index is preferably at least 1, more preferably at least 1.2. Refractive index of the inorganic materials may be measured by standard techniques such as ASTM E1967-98 (2003) or as disclosed in Handbook of Optics, volume 1, by Optical Society of America, 1995.

The following examples illustrate, but do not limit the present invention. All parts and percentages are based upon weight, unless otherwise specified. Arabic numerals represent examples (Ex) of the present invention while letters of the alphabet designate comparative examples (Comp Ex).

Physical property testing of films for use in forming window patches suitable for use in window envelopes uses the following procedures:
45° Gloss - ASTM D-2457
Percent Haze - ASTM D-1003

### Film Preparation Processes

Using an apparatus like that described in US Patent Publication 20040242786, prepare a polymer film via an oriented blown film process (hereinafter "Process A"). Feed polymer pellets to the apparatus and convert them to a polymer melt that has a temperature within a range of from 170°C to 200°C, then cool the polymer melt to a temperature within a range of from 130°C to 170°C to increase melt viscosity before extruding the polymer melt through a blown film die into a gaseous atmosphere that is at a temperature at least 40°C below the polymer melt's lowest organic polymer heat distortion temperature. If there is only one organic polymer in the polymer melt, that polymer's heat distortion temperature is the lowest organic polymer heat distortion temperature. If there are two or more organic polymers in the polymer melt, the lowest heat distortion temperature among the polymers functions as the polymer melt's lowest organic polymer heat distortion temperature.

Prepare an oriented blown polymer film using an alternate process (hereinafter "Process B") that includes two extruders (designated "Extruder 1" and "Extruder 2") arranged in series. Extruder 1 is a 2 1/2" diameter, 24:1 single screw extruder with 5 barrel zones having temperatures set points from 155°C to 200°C. Extruder 2 is a 3 1/2" diameter, 32:1 single screw with a barrier mixing screw. Zone set point temperatures for this extruder's 5 barrel zones range from 115°C to 175°C. Feed polymer pellets to Extruder 1 where the material is plasticized and pumped to a feed port of Extruder 2 at a melt temperature of approximately 235°C. Cool polymer melt passing through the second extruder to a melt temperature of 166°C by contact with temperature controlled extruder barrel walls. The polymer melt exits Extruder 2 via a 3.25 inch (in.) (8.3 centimeter (cm) annular die with a 0.12 in. (0.3 cm) die gap and then through a 4.5 in. (11.4 cm) diameter air ring where it is blown or expanded into a bubble using air heated to an environmental set point temperature within a range of from 20°C to 80°C). Collapse the blown film or bubble into a double-fold film using a series of flattening rollers and trim the edges from the double-fold film to yield two sheets of film having a width that typically ranges from 36 in. (91.4 cm) to 42 in. (106.7 cm). Wind the sheets of film into rolls for later use and evaluation.

Control film orientation to a degree by varying the distance between the annular die and a point at which the polymer melt begins to stretch in a direction transverse to the extruder's axis. A distance of 12 cm is referred to as "mini-neck" and abbreviated as "MN" whereas a distance of 60 cm is referred to as "long neck" and abbreviated as "LN". Skilled artisans understand that processing a composition with MN distance will yield a film with optical properties that differ from those of a film prepared by processing the same composition with a LN distance. As film orientation designations apply only to Process B, enter "N/A", which means "not applicable", in the Film Orientation Control Variable column of Table I below.

Irrespective of which process is used, the resulting film has a target thickness of approximately 1.1 mils (28 µm). A skilled artisan recognizes that, in practice, some variability from the target thickness is normal.

In preparing films for many of the Ex and Comp Ex below, Resin A = a HIPS resin having a butadiene rubber content of 7.2 wt%, based upon resin weight, and an average rubber particle size of 2.0 µm (STYRON™ 404, The Dow Chemical Company); Resin B = a HIPS resin having a bimodal polybutadiene rubber content of 8.5 wt%, based upon resin weight, and an average rubber particle size of 4.5 µm (STYRON™ A-TECH™ 1170, The Dow Chemical Company); Resin C = a developmental HIPS resin having a styrene/butadiene block copolymer rubber content of 7 wt%, based upon resin weight, which translates to an equivalent polybutadiene content of 4.6 wt%, also based on resin weight, and an average rubber particle size of 0.35 µm (The Dow Chemical Company); and Resin D is a HIPS resin having a butadiene rubber content of 7 wt%, based upon resin weight, and a rubber particle size of 1.0 µm (STYRON™ 498, The Dow Chemical Company).

### Window Envelope Preparation

Unwind window film from a roll. Apply adhesive either to the film or to paper to which the film is to be bonded. Cut the film into rectangular shapes and transfer the shapes via a vacuum patch transfer cylinder to the paper. Transport the resulting paper/adhesive/film construction to subsequent converting operations.

### Comp Ex A

Dow Window Film (DWF) Clear LD (The Dow Chemical Company), prepared using Process A, has a composition that is 99 wt% general purpose polystyrene (GPPS) resin (STYRON™ 665, The Dow Chemical Company) and 1 wt% polytetrafluoroethylene (PTFE) concentrate (20 wt% PTFE and 80 wt% GPPS, based upon concentrate weight, Spartech Corporation), in both cases based upon organic polymer content of the film.

Evaluate the film for 45° Gloss, Haze and the window envelope for MHCFD failure percentage rate and summarize the data in Table I below.

### Comp Ex B

Replicate Comp Ex A, but substitute a window envelope patch cut from a commercial film (PROCITE™ U, The Dow Chemical Company) formed from a blend of 64 wt% GPPS resin (STYRON™ 665, The Dow Chemical Company), 35 wt% high impact polystyrene (HIPS) resin (STYRON™ 404, 7 wt%, based on HIPS resin weight, rubber, 2.0 µm to 2.5 µm average particle size, The Dow Chemical Company), and 1 wt% of the same PTFE concentrate as in Comp Ex A. Summarize film 45° Gloss and Haze and MHCFD failure percentage rate data in Table I below.

### Comp Ex C

Replicate Comp Ex A, but substitute a window envelope patch cut from a film prepared from 100% of the same GPPS resin as in Comp Ex B. Summarize film 45° Gloss and Haze and MHCFD failure percentage rate data in Table I below.

### Comp Ex D and Ex 1-11

Replicate Comp Ex B, but change the process to Process B for Comp Ex D and Ex 1-11, using either LN or MN as shown in Table I below, and alter the composition for each Ex to that shown in Table I below. As with Comp Ex A, Comp Ex D and each of Ex 1-11 contain 1% of the PTFE concentrate. Summarize film 45° Gloss and Haze and MHCFD failure percentage rate data in Table I below.

### Ex 12

Replicate Comp Ex A, but substitute a window envelope patch cut from a film prepared from 100 wt% of the HIPS used in Comp Ex B. Process A and change the composition to that shown in Table I below. Summarize film 45° Gloss and Haze and MHCFD failure percentage rate data in Table I below..

### Ex 13-15

Replicate Comp Ex B, but alter the composition for each Ex to that shown in Table I below. As with Comp Ex A, each of Ex 13-15 contains 1% of the PTFE concentrate. Summarize film 45° Gloss and Haze and MHCFD failure percentage rate data in Table I below.

**Table I**

| Ex/- Comp Ex | Process | Film Orientation Control Variable | GPPS (wt%) | HIPS (wt%) | Resin Type | Film % Haze | Film 45° gloss | MHCFD Failure % |
|---|---|---|---|---|---|---|---|---|
| A | A | N/A | 99 | 0 | N/A | 7.2 | 97 | 30 |
| B | A | N/A | 64 | 35 | A | 19.7 | 53 | 52 |
| C | A | N/A | 100 | 0 | N/A | 0.5 | 112 | Not Determined |
| D | B | LN | 74 | 25 | A | 19.1 | 57 | Not Determined |
| 1 | B | LN | 49 | 50 | A | 30.9 | 335 | 40 |
| 2 | B | LN | 34 | 65 | A | 41.4 | 28.9 | 21 |
| 3 | B | MN | 19 | 80 | A | 51.1 | 25 | 22 |
| 4 | B | MN | 69 | 30 | B | 50.4 | 242 | Not Determined |
| 5 | B | LN | 69 | 30 | B | 63.7 | 25.7 | Not Determined |
| 6 | B | MN | 57 | 42 | B | 61 | 18.1 | Not Determined |
| 7 | B | LN | 57 | 42 | B | 59 | 17.6 | Not Determined |
| 8 | B | MN | 44 | 55 | B | 68.4 | 183 | Not Determined |
| 9 | B | LN | 0 | 99 | C | 69 | 87.4 | Not Determined |
| 10 | B | LN | 0 | 59/40 | C/A | 18.8 | 52.1 | Not Determined |
| 11 | B | LN | 0 | 99 | D | 20 | 502 | Not Determined |
| 12 | A | N/A | 0 | 100 | A | 60 | 16 | 0 |
| 13 | A | N/A | 49 | 50 | A | 30.9 | 343 | Not Determined |
| 14 | A | N/A | 71 | 28 | B | 38.2 | 33 | Not Determined |
| 15 | A | N/A | 61 | 38 | B | 47 | 25.6 | Not Determined |

The data presented in Table I illustrate two points. First, rubber-modified VAP such as rubber modified polystyrene affects film optical properties such as haze and gloss. Second, one can vary the type and amount of rubber-modified VAP in order to attain window envelope films with a desirable balance of % haze and 45° gloss.

### Ex 16-19

Select two commercial products to evaluate efficacy of an inorganic coating. One commercial product is the film used in Comp Ex A (Film A) and the other is the film used in Comp Ex B (Film B). Apply a MgF₂ coating with a thickness of approximately 170 nm to one or both sides of Film A and Film B via vacuum deposition. Unwind the film in a vacuum chamber, allow MgF₂ vapor to condense onto the film and then rewind the film. If necessary, repeat the process. Coordinate MgF₂ evaporation rate and film speed to attain a desired MgF₂ coating thickness. Ex 16 and 17 are, respectively, one side coated Film A and one side coated Film B. Ex 18 and 19 are, respectively, two side coated Film A and two side coated Film B. Summarize film 45° Gloss and Haze and MHCFD failure percentage rate data in Table II below.

### Ex 20-21

Replicate Ex 17 and 19, but substitute a coating of silicon oxide (SiOₓ) with a thickness of approximately 120 nm for the MgF₂ coating. Apply the coating using the apparatus described in Example 1 of USP 6,815,014, the teachings of which are incorporated herein by reference, with certain hardware and process modifications. The electrodes are composite ceramic/metal electrodes and the substrate is Film B. Heat tetraethylorthosilicate (TEOS) rather than tetramethyldisiloxane (TMDSO) as in '014 to 120°C and carry vaporized TEOS in a gaseous nitrogen stream and mix it with balance gas (air) as in '014 and use a deposition time shown in Table II below. Measure average percent reflectance of Comp Ex A, Ex 20 (one-side coated) and Ex 21 (two-side coated) using a Hunter Lab Ultrascan Sphere Spectrocolorimeter (Model ColorQuest XE). Summarize deposition or discharge time, percent reflectance, film 45° Gloss and Haze and MHCFD failure percentage rate data in Table II below.

**Table II**

| Ex/Comp Ex | Film % Haze | Film 45 ° gloss | MHCFD % | Discharge Time (seconds) | % Reflectance |
|---|---|---|---|---|---|
| A | 7.2 | 97 | 30 | 0 | 9.09 |
| B | 19.7 | 53 | 52 | Not Applicable | Not Applicable |
| 16 | 6.96 | 72.1 | 0 | Not Applicable | Not Applicable |
| 17 | 21.32 | 38.3 | 0 | Not Applicable | Not Applicable |
| 18 | 6.7 | 36.3 | 0 | Not Applicable | Not Applicable |
| 19 | 21.76 | 21.8 | 0 | Not Applicable | Not Applicable |
| 20 | 19.5 | 49.9 | Not Determined | 7.5 | 6.62 |
| 21 | 19.9 | 48.4 | Not Determined | 15 | 4.17 |

The data presented in Table II demonstrate that an inorganic coating such as MgF₂ effectively reduces film gloss with minimal change in film haze properties. The data also show that an inorganic coating on both sides of a film (Ex 18, 19 and 21) offers a greater reduction in film gloss than a coating of the same inorganic material on a single side of the film (Ex 16, 17 and 20). For Ex 16, as H is less than 22% so the formula Gloss < 104.4*exp(-0.0289*H) - 8 applies. The reported gloss of 72.1 is less than a calculated gloss of 77. As such, it is an example of the present invention rather than a comparative example.

Results similar to those obtained in Ex 16-21 are expected when any of the films of Ex 1-15 are substituted for the commercial films used to prepare window patches for window envelopes in Comp Ex A and Comp Ex B. Similar results are also expected with other inorganic coating deposition techniques such as plasma deposition of a SiOx coating as taught in USP 5,298,587, the teachings of which are incorporated herein by reference.

## Claims

1. A window envelope having one or more window openings, at least one window opening being closed or sealed by a non-opaque polymeric or plastic window patch, the window patch comprising an optical-scanner readable, biaxially-oriented polymeric film, the film having a 45° gloss that is less than or equal to 50 and comprising an organic polymer composition selected from a rubber-modified vinyl aromatic polymer resin and a blend of a vinyl aromatic polymer resin with a rubber-modified vinyl aromatic polymer resin, the rubber-modified vinyl aromatic resin having an average unconstrained rubber particle size within a range of from 0.1 micrometer to 10 micrometers, wherein the rubber-modified vinyl aromatic polymer is present in an amount sufficient to provide the film with a rubber content of equal to or greater than 2 percent by weight based on the weight of the film and up to 9 percent by weight based on the weight of the film.

2. The window envelope of Claim 1, wherein the polymer composition comprises a blend of a vinyl aromatic polymer resin and a rubber-modified vinyl aromatic polymer resin that has a rubber-modified vinyl aromatic polymer resin content of at least 40 percent by weight and a vinyl aromatic polymer resin content of up to 60 percent by weight, in each case based upon the weight of organic polymer resins contained in the blend.

3. The window envelope of Claim 1, wherein the film comprises a blend of a vinyl aromatic polymer resin and a rubber-modified vinyl aromatic polymer resin that has a rubber-modified vinyl aromatic polymer resin content of at least 40 percent by weight and a vinyl aromatic polymer resin content of up to 60 percent by weight, in each case based upon the weight of organic polymer resins contained in the blend.

4. The window envelope of Claim 1, Claim 2 or Claim 3, wherein the film further comprises an external coating layer of an inorganic material, the external layer being deposited upon at least one major surface of the film.

5. The window envelope of Claim 4, wherein the inorganic material has an index of refraction between 1.00 and 1.54.

6. The window envelope of Claim 4 or Claim 5, wherein the external coating layer comprises at least one inorganic material selected from magnesium fluoride, silicon oxide, lithium fluoride, cryolite, and thallium fluoride.

7. The window envelope of Claim 1, wherein the film has a rubber content of from 3 percent to 9 percent by weight.

8. The window envelope of Claim 1, wherein the average unconstrained rubber particle size is from 0.4 micrometer to 8 micrometers.

9. The window envelope of any of the preceding Claims, wherein the film has a haze, determined in accordance with ASTM D-1003, of no more than 22 percent and a 45-degree gloss, determined in accordance with ASTM D-2457, of less than (104.4*e^{-0.0289*H})- 8, where H denotes the percent of haze.

10. The window envelope of any of the preceding Claims, wherein the film has a percent haze less than or equal to 70 percent.

11. The window envelope of Claim 1, wherein the film has a percent haze greater than 30 percent but less than 70 percent.

12. The window envelope of any of the preceding Claims, wherein the polymeric film is a multilayer film, and at least one outer layer of the multilayer film comprises the organic polymer composition.

## Patentansprüche

1. Ein Fensterumschlag mit einer oder mehreren Fensteröffnungen, wobei mindestens eine Fensteröffnung durch ein nichtopakes Polymer- oder Kunststoff-Fensterteil geschlossen oder versiegelt wird, wobei das Fensterteil eine durch einen optischen Leser lesbare, biaxial gestreckte Polymerfolie beinhaltet, wobei die Folie einen 45°-Glanz aufweist, der kleiner gleich 50 ist und eine organische Polymerzusammensetzung, ausgewählt aus einem kautschukhaltigen vinylaromatischen Polymerharz und einer Mischung eines vinylaromatischen Polymerharzes mit einem kautschukhaltigen vinylaromatischen Polymerharz, beinhaltet, wobei das kautschukhaltige vinylaromatische Harz eine durchschnittliche unbegrenzte Kautschukpartikelgröße innerhalb eines Bereichs von 0,1 Mikrometer bis 10 Mikrometer aufweist, wobei das kautschukhaltige vinylaromatische Polymer in einer Menge vorhanden ist, die ausreichend ist, um die Folie mit einem Kautschukgehalt von gleich oder mehr als 2 Gewichtsprozent, bezogen auf das Gewicht der Folie, und bis zu 9 Gewichtsprozent, bezogen auf das Gewicht der Folie, zu versehen.

2. Fensterumschlag gemäß Anspruch 1, wobei die Polymerzusammensetzung eine Mischung eines vinylaromatischen Polymerharzes und eines kautschukhaltigen vinylaromatischen Polymerharzes, das einen kautschukhaltigen vinylaromatischen Polymerharzgehalt von mindestens 40 Gewichtsprozent und einen vinylaromatischen Polymerharzgehalt von bis zu 60 Gewichtsprozent, in jedem Fall bezogen auf das Gewicht von in der Mischung enthaltenen organischen Polymerharzen, beinhaltet.

3. Fensterumschlag gemäß Anspruch 1, wobei die Folie eine Mischung eines vinylaromatischen Polymerharzes und eines kautschukhaltigen vinylaromatischen Polymerharzes, das einen kautschukhaltigen vinylaromatischen Polymerharzgehalt von mindestens 40 Gewichtsprozent und einen vinylaromatischen Polymerharzgehalt von bis zu 60 Gewichtsprozent, in jedem Fall bezogen auf das Gewicht von in der Mischung enthaltenen organischen Polymerharzen, beinhaltet.

4. Fensterumschlag gemäß Anspruch 1, Anspruch 2 oder Anspruch 3, wobei die Folie ferner eine externe Beschichtungsschicht eines anorganischen Materials beinhaltet, wobei die externe Schicht auf mindestens einer Hauptoberfläche der Folie aufgebracht ist.

5. Fensterumschlag gemäß Anspruch 4, wobei das anorganische Material einen Brechungsindex von zwischen 1,00 und 1,54 aufweist.

6. Fensterumschlag gemäß Anspruch 4 oder Anspruch 5, wobei die externe Beschichtungsschicht mindestens ein anorganisches Material, ausgewählt aus Magnesiumfluorid, Siliciumoxid, Lithiumfluorid, Kryolith und Thalliumfluorid, beinhaltet.

7. Fensterumschlag gemäß Anspruch 1, wobei die Folie einen Kautschukgehalt von 3 Gewichtsprozent bis 9 Gewichtsprozent aufweist.

8. Fensterumschlag gemäß Anspruch 1, wobei die durchschnittliche unbegrenzte Kautschukpartikelgröße von 0,4 Mikrometer bis 8 Mikrometer beträgt.

9. Fensterumschlag gemäß einem der vorhergehenden Ansprüche, wobei die Folie eine Mattierung, bestimmt gemäß ASTM D-1003, von nicht mehr als 22 Prozent und einen 45-Grad-Glanz, bestimmt gemäß ASTM D-2457, von weniger als (104,4*e^{-0.0289*H})-8, wobei H das Prozent der Mattierung bezeichnet, aufweist.

10. Fensterumschlag gemäß einem der vorhergehenden Ansprüche, wobei die Folie eine Prozentmattierung von weniger oder gleich 70 Prozent aufweist.

11. Fensterumschlag gemäß Anspruch 1, wobei die Folie eine Prozentmattierung von mehr als 30 Prozent, aber weniger als 70 Prozent aufweist.

12. Fensterumschlag gemäß einem der vorhergehenden Ansprüche, wobei die Polymerfolie eine Mehrschichtfolie ist und mindestens eine äußere Schicht der Mehrschichtfolie die organische Polymerzusammensetzung beinhaltet.

## Revendications

1. Une enveloppe à fenêtre ayant une ou plusieurs ouvertures de fenêtre, au moins une ouverture de fenêtre étant fermée ou obturée par une pièce formant fenêtre polymère ou en matière plastique non opaque, la pièce formant fenêtre comprenant un film polymère lisible par scanner optique et orienté biaxialement, le film ayant une brillance à 45° qui est inférieure ou égale à 50 et comprenant une composition de polymère organique sélectionnée parmi une résine polymère vinylaromatique modifiée par du caoutchouc et un mélange homogène d'une résine polymère vinylaromatique avec une résine polymère vinylaromatique modifiée par du caoutchouc, la résine vinylaromatique modifiée par du caoutchouc ayant une taille de particule de caoutchouc non contrainte moyenne comprise dans une gamme allant de 0,1 micromètre à 10 micromètres, dans laquelle le polymère vinylaromatique modifié par du caoutchouc est présent dans une quantité suffisante pour fournir au film une teneur en caoutchouc supérieure ou égale à 2 pour cent en poids rapporté au poids du film et jusqu'à 9 pour cent en poids rapporté au poids du film.

2. L'enveloppe à fenêtre de la revendication 1, dans laquelle la composition de polymère comprend un mélange homogène d'une résine polymère vinylaromatique et d'une résine polymère vinylaromatique modifiée par du caoutchouc qui a une teneur en résine polymère vinylaromatique modifiée par du caoutchouc d'au moins 40 pour cent en poids et une teneur en résine polymère vinylaromatique allant jusqu'à 60 pour cent en poids, dans chaque cas rapporté au poids des résines polymères organiques contenues dans le mélange homogène.

3. L'enveloppe à fenêtre de la revendication 1, dans laquelle le film comprend un mélange homogène d'une résine polymère vinylaromatique et d'une résine polymère vinylaromatique modifiée par du caoutchouc qui a une teneur en résine polymère vinylaromatique modifiée par du caoutchouc d'au moins 40 pour cent en poids et une teneur en résine polymère vinylaromatique allant jusqu'à 60 pour cent en poids, dans chaque cas rapporté au poids des résines polymères organiques contenues dans le mélange homogène.

4. L'enveloppe à fenêtre de la revendication 1, la revendication 2 ou la revendication 3, dans laquelle le film comprend en outre une couche de revêtement externe d'un matériau inorganique, la couche externe étant déposée sur au moins une surface principale du film.

5. L'enveloppe à fenêtre de la revendication 4, dans laquelle le matériau inorganique a un indice de réfraction entre 1,00 et 1,54.

6. L'enveloppe à fenêtre de la revendication 4 ou la revendication 5, dans laquelle la couche de revêtement externe comprend au moins un matériau inorganique sélectionné parmi le fluorure de magnésium, l'oxyde de silicium, le fluorure de lithium, la cryolite, et le fluorure de thallium.

7. L'enveloppe à fenêtre de la revendication 1, dans laquelle le film a une teneur en caoutchouc allant de 3 pour cent à 9 pour cent en poids.

8. L'enveloppe à fenêtre de la revendication 1, dans laquelle la taille de particule de caoutchouc non contrainte moyenne va de 0,4 micromètre à 8 micromètres.

9. L'enveloppe à fenêtre de n'importe lesquelles des revendications précédentes, dans laquelle le film a un trouble, déterminé conformément à l'ASTM D-1003, n'excédant pas 22 pour cent et une brillance à 45 degrés, déterminée conformément à l'ASTM D-2457, inférieure à (104,4*e^{-0,0289*H})-8, où H désigne le pourcentage de trouble.

10. L'enveloppe à fenêtre de n'importe lesquelles des revendications précédentes, dans laquelle le film a un pourcentage de trouble inférieur ou égal à 70 pour cent.

11. L'enveloppe à fenêtre de la revendication 1, dans laquelle le film a un pourcentage de trouble supérieur à 30 pour cent mais inférieur à 70 pour cent.

12. L'enveloppe à fenêtre de n'importe lesquelles des revendications précédentes, dans laquelle le film polymère est un film multicouche, et au moins une couche extérieure du film multicouche comprend la composition de polymère organique.
